(19) Europäisches Patentamt / European Patent Office / Office européen des brevets

(11) **EP 2 811 674 A1**

(12) **EUROPEAN PATENT APPLICATION**

(43) Date of publication:
**10.12.2014 Bulletin 2014/50**

(51) Int Cl.:
***H04J 11/00*** *(2006.01)*

(21) Application number: **13170735.8**

(22) Date of filing: **06.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Nokia Solutions and Networks Oy 02610 Espoo (FI)**

(72) Inventors:
• **Fleischer, Marko 82008 Unterhaching (DE)**

• **Heinz, Helmut 86842 Türkheim (DE)**
• **Splett, Armin 89079 Ulm (DE)**

(74) Representative: **Borgström, Markus et al Nokia Solutions and Networks GmbH & Co. KG CEF T&I IPR / Patent Administration 80240 Munich (DE)**

(54) **Method, apparatus and computer program product for inter cell interference cancellation**

(57)     A cell of a cellular communication network, which transmits and receives signals based on time division duplex, obtains (S10) downlink transmission data of an interfering cell via an optical fiber network between the cell and the interfering cell, receives (S11) a signal over the air, the signal comprising an uplink signal and an interference signal, estimates (S12) a reference receiver signal based on the downlink transmission data and a model of an air channel between the interfering cell and the cell, and subtracts (S13) the reference receiver signal from the signal received over the air.

Fig. 3

**Description**

BACKGROUND OF THE INVENTION

Field of the invention

The present invention relates to inter cell interference cancellation in a cellular communication network system. In particular, the invention relates to inter cell TXRX interference cancellation in smart TDD networks.

Related background Art

The following meanings for the abbreviations used in this specification apply:

| | |
|---|---|
| BTS | Base transceiver station |
| Dark fiber | Optical fiber infrastructure (cabling and repeaters) |
| DL | Downlink |
| FDD | Frequency Division Duplex |
| HW | Hardware |
| ICI | Inter cell interference |
| IQ AxC data | IQ antenna carrier data (layer 0 base band data prior to RF modulation) |
| RF | Radio Frequency |
| RB | Resource block |
| SNIR | Signal to interference plus noise ratio |
| TDD | Time-Division Duplex |
| UE | User Equipment |
| UL | Uplink |
| WiMAX | Worldwide Interoperability for Microwave Access |

Communication network systems based on TDD (referred to as TDD systems) have several advantages compared to communication network systems based on FDD (referred to as FDD systems). A key benefit of TDD systems is the simpler hardware realization due to the fact that transmission and reception of data is time multiplexed on the same channel. This allows lower RF cost as no diplexer is needed to isolate transmitter and receiver. The advantages of TDD systems are typically observed in situations where uplink and downlink data transmissions are unsymmetrical.

Simpler frequency allocation and cheaper auctioned TDD bands due to the absence of paired frequency blocks is a further aspect for TDD deployments in future networks. TD-LTE overlaps with WiMAX bands, making it an attractive evolution path for WiMAX operators.

The mentioned superiorities of TDD systems entail the drawback of a guard period, separating uplink and downlink transmissions and ensuring no clashes. Base stations need to be synchronized with respect to uplink and downlink transmission times. TD-LTE offers even an option to dynamically balance DL/UL traffic while dedicating channel resources to UL or DL slots according to the traffic needs. If neighboring base stations use different uplink and downlink assignments and share the same channel, then interference may occur between cells. This TDD key problem is known as cross slot interference.

TD-LTE offers operators a great alternative to FDD in case cross slot or time synchronization induced interference problems are solved. Its natural suitability for asymmetric applications, low latency, high throughput, and security make it a flexible and cost-effective solution for next generation wireless networks.

The cross slot or synchronization induced interference limits the dynamic balancing of DL/UL slots according to the cell needs in current TD-LTE networks. It makes the cell planning difficult and reduces frequency reuse. Eventually higher guard period might be required for proper cell setups bringing the data throughput and spectrum efficiency down.

Interference for a TD-LTE system exists between users occupying the same RBs in different cells. If this characteristic is considered in OFDMA systems the signal to interference plus noise ratio SNIR calculation for a given resource block $RB_t$ of base station $BS_i$ in TD-LTE uplink is:

$$\text{SNIR}^{RBt}{}_{UL} = \frac{S}{\left( \sum I_{other} + N_0 \right)}$$

with S as UE signal power for a given $RB_t$
$N_0$ thermal noise power
$\sum I_{other}$ sum of inter cell interference power

Link level performance models allow the direct mapping of SNIR values to UL throughput.

A victim TD- LTE is suffering not only severely from neighboring cells with the same frequency use but is affected also from legacy TDD systems as TD-SCDMA/HSDPA or spurious emissions from FDD LTE channels.

Beam-forming can provide a unique ability of cell range extension due to its higher gain, obtain interference cancellation and mitigation of multi-path fading in some typical wireless environments. Intelligent slot management, virtual cell concepts or other clash avoidance strategies for cross slot interference have been proposed but are only beneficial if slot options are still available which might not be the case under high traffic load.

SUMMARY OF THE INVENTION

The invention aims at alleviating the above interference channel degradations.

This is at least in part achieved by the method, apparatus and computer program product as defined in the appended claims.

According to an exemplary embodiment of the invention, an interference cancellation method making use of an a priori knowledge of transmit data in neighboring cells is proposed to improve interference channel degradations.

In the following the invention will be described by way of exemplary embodiments thereof with reference to the accompanying drawings.

BRIEF DESCRIPTION OF THE DRAWINGS

Fig. 1 shows a schematic diagram illustrating a TDD scenario with different kinds of inter cell interferences.

Fig. 2 shows a schematic diagram illustrating an example of cross slot conflict.

Fig. 3 shows a flow chart illustrating an interference cancellation process according to an exemplary embodiment of the invention.

Fig. 4 shows a schematic diagram illustrating a TDD TXRX cancellation example for cross slot interference according to an exemplary embodiment of the invention.

Fig. 5 shows a schematic block diagram illustrating a configuration of a control unit in which examples of embodiments of the invention are implementable.

DESCRIPTION OF THE EXEMPLARY EMBODIMENTS

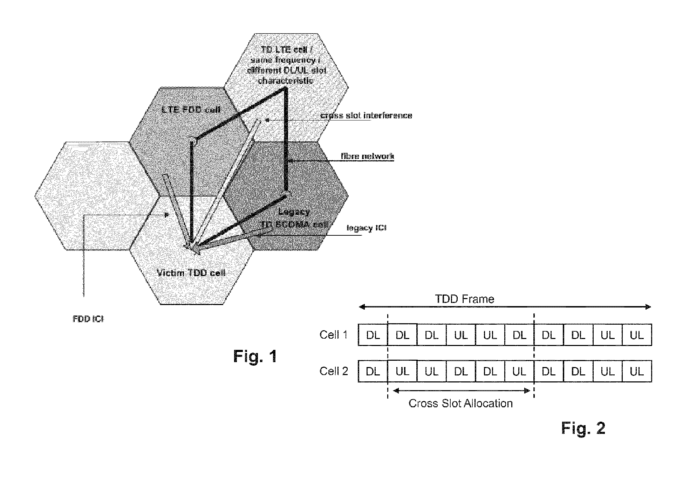

Fig. 1 shows a schematic diagram illustrating a TDD scenario with different kinds of inter cell interferences, and Fig. 2 shows a schematic diagram illustrating an example of cross slot conflict.

Referring to Fig. 1, several cells of a cellular communication network system are shown, comprising a victim TDD cell, an LTE FDD cell, TD LTE cell and a legacy TD SCDMA cell. Between the victim TDD cell and the LTE FDD cell there is FDD ICI, between the victim TDD cell and the TD LTE cell there is cross slot interference, and between the victim TDD cell and the legacy TD SCDMA cell there is legacy ICI. The bold lines in Fig. 1 illustrate a fiber network connecting the cells.

Referring to Fig. 2, there is a cross slot conflict according to the cross slot allocation in the TDD frames of cell 1 and cell 2, e.g. the victim TDD cell and the TD LTE cell shown in Fig. 1. The same frequency but a different DL/UL slot characteristic is used for the TDD frames.

According to at least one exemplary embodiment of the invention, knowledge of DL transmission data transmitted from surrounding /neighboring cells is used by victim TD LTE cells, suffering from cross slot interference, TD SCDMA legacy systems, TD-HSDPA or adjacent FDD spurious emissions.

An intelligent coordinated network management schedules DL transmission data not only to a serving cell but also to any interference affected neighboring or victim cell e.g. via high speed optical fiber links (dark fiber). Those data is received in terms of delay at the victim cell prior or at the same time as its transmission caused interference signal travelling over the air. Appropriate for direct use is a stream of IQ AxC data, available in every aggressor BTS prior to RF modulation.

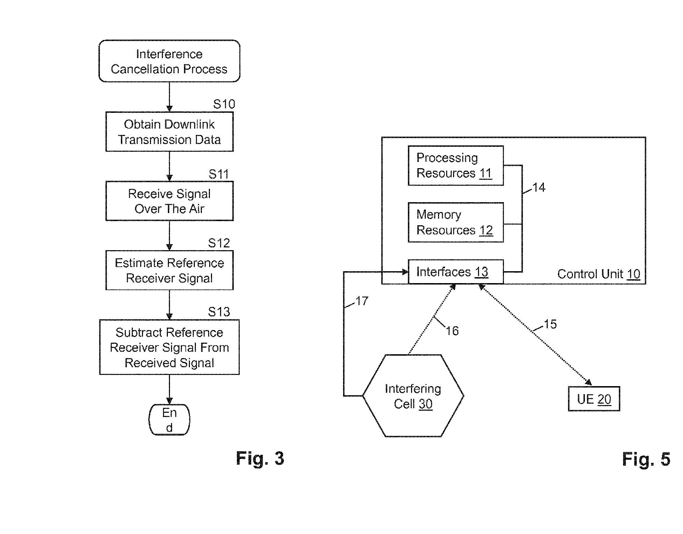

Fig. 3 illustrates an interference cancellation process according to an exemplary embodiment of the invention, which is based on the knowledge of DL transmission data. The process may be executed by an apparatus of a cell (victim cell, e.g. the victim TDD cell shown in Fig. 1) of a cellular communication network (e. g. a TDD-LTE network). The apparatus may comprise a base station of a radio access network.

In step S10, downlink transmission data of an interfering cell is obtained via a network between the victim cell and the interfering cell. The network comprises optical fiber links. The downlink transmission data may be obtained prior or at the same time as its transmission caused interference signal travelling over an air channel between the interfering cell and the victim cell. The downlink transmission data may comprise a stream of layer 0 base band data prior to radio frequency modulation. Further, the downlink transmission data may be obtained directly from the interfering cell or via another cell, e.g. a neighboring cell of the victim cell.

In step S11, a signal is received over the air, the signal comprising an uplink signal and an interference signal. The interference signal may comprise cross slot interference as illustrated in Fig. 2, interference from a communication network system based on time division duplex (e.g. the legacy TD SCDMA cell shown in Fig. 1), and interference from a network communication system based on frequency division duplex (e.g. the LTE FDD cell shown in Fig. 1).

In step S12, a reference receiver signal is estimated based on the downlink transmission data and a model of the air channel between the interfering cell and the victim cell. This model may be subjected to continued adaptation. The reference receiver signal may be estimated as a first stream of layer 0 base band data.

In step S13, the reference receiver signal is subtracted from the signal received over the air. The signal received over the air may be demodulated into a second stream of layer 0 base band data, and the above-mentioned first stream may be subtracted from the second stream.

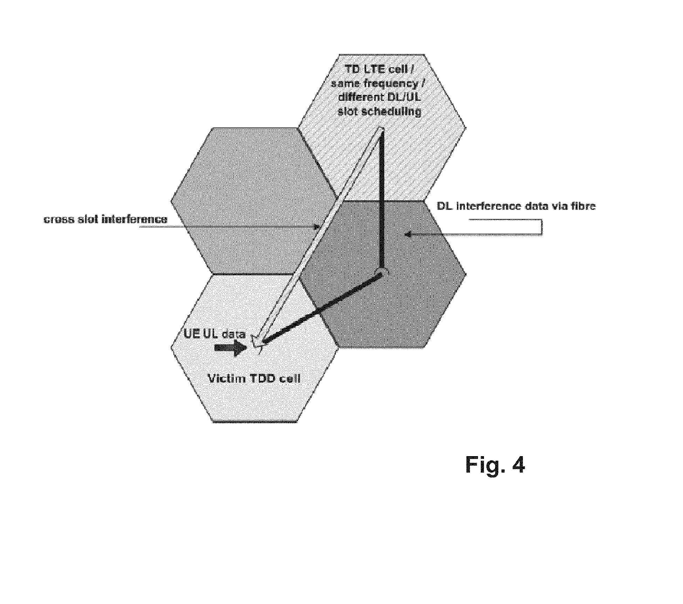

In Fig. 4 a principle according to an exemplary embodiment of the invention is depicted as an example for the cross slot interference without loss of generality for all other kind of interferences. Fig. 4 shows several cells of a communication network system, comprising the victim TDD cell and the TD LTE cell of Fig. 1, and illustrating the cross slot interference between the victim TDD cell and the TD LTE cell as well as fiber connection between these cells.

The victim TDD cell received a wanted UE UL signal and at the same time cross slot interference. In other words, the received signal comprises a wanted uplink signal and an interference signal. Channel estimation is done for the received cross slot interference using DL interference data (downlink transmission data) of the TD LTE cell (aggressor cell) provided via the fiber network from a neighboring cell of the victim cell as a reference receiver channel (reference receiver signal). In this way, an appropriate model (TXRX cancellation model) for delay, gain and distortion adjustment is obtained. Thus, the UE UL signal can be cleaned from cross slot interference while subtracting the modeled reference receiver signal according to an air channel model. Channel estimation and modeling is subject to permanent adaptation.

According to an exemplary embodiment of the invention, for the proposed interference cancellation process the following equations apply:

(1) Received signal in victim cell over air= UE UL data + cross slot interference

(2) cross slot interference = TXRX cancellation model(aggressor cell DL interference data via fiber)

(3) UE UL data + cross slot interference - TXRX cancellation model(aggressor cell DL interference data via fiber) = UE UL data + residual interference noise

Using the optical network as a reference receiver network allows with appropriate air channel estimation to clean wanted UL UE data from interference distortions. This decreases the interference power, improves the UL quality and throughput in the victim cell. Dynamically DL/UL slot scheduling can be done more flexible according to the cell needs rather than have it synchronized in the entire network.

Eventually guard period times could be not as stringent as before bringing the spectral efficiency of TD-LTE near to FD-LTE for practical implementations.

In case of "BTS hoteling", UL IQ AxC data is transferred from RF equipment at antenna sites to a central "Baseband hotel". At the central "Baseband hotel" also DL IQ AxC data of the aggressor BTS (aggressor cell) are available. Hence the proposed interference cancellation process may be processed already inside the "Baseband hotel". In some cases the DL IQ AxC data of the aggressor BTS may be sent from a neighboring Baseband hotel or BTS (neighboring cell).

The proposed interference cancellation process is beneficial in relaxing the constraints for joint or coordinated scheduling between many radio cells, since the number of potential conflicts can be reduced. Therefore the overall network data throughput, i.e. the network capacity can be increased.

Now reference is made to Fig. 5 for illustrating a simplified block diagram of a control unit 10 that is suitable for use in practicing the exemplary embodiments of this invention. The control unit 10 may be part of and/or used by an apparatus of a communication network, e.g. a base station. By means of the control unit 10 the process shown in Fig. 3 may be executed.

The control unit 10 comprises processing resources 11, memory resources 12 and interfaces 13, which are connected via a link 14. The memory resources 12 may store a program. The control unit 10 receives a signal comprising an uplink signal from a UE 20 over a connection 15 via its interfaces 13. The control unit further receives downlink transmission data of an interfering cell 30 over a connection 16 via its interfaces 13.

The terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and printed electrical connections, as well as by the use of electromagnetic energy, such as electromagnetic energy having wavelengths in the radio frequency region, the microwave region and the optical (both visible and invisible) region, as non-limiting examples.

The program stored in the memory resources 12 is assumed to include program instructions that, when executed by the processing resources 11, enable the electronic device to operate in accordance with the exemplary embodiments of this invention, as detailed above. Inherent in the processing resources 11 is a clock to enable synchronism among the various apparatus for transmissions and receptions within the appropriate time intervals and slots required, as the scheduling grants and the granted resources/subframes are time dependent. The interfaces 13 may comprise transceivers including both transmitter and receiver, and inherent in each is a modulator/demodulator commonly known as a modem. The processing resources 11 also are assumed to include a modem to facilitate communication over the (hardwire) connection 16.

In general, the exemplary embodiments of this invention may be implemented by computer software stored in the memory resources 12 and executable by the processing resources 11, or by hardware, or by a combination of software and/or firmware and hardware.

In general, the various examples of the UE 20 can include, but are not limited to, mobile stations, cellular telephones, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The memory resources 12 may be of any type suitable to the local technical environment and may be implemented using any suitable data storage technology, such as semiconductor-based memory devices, magnetic memory devices and systems, optical memory devices and systems, fixed memory and removable memory. The processing resources 11 may be of any type suitable to the local technical environment, and may include one or more of general purpose computers, special purpose computers, microprocessors, digital signal processors (DSPs) and processors based on a multi-core processor architecture, as non-limiting examples.

According to an aspect of the invention, an apparatus of a cell of a cellular communication network is provided. The apparatus may comprise the control unit 10 shown in Fig. 5, and may execute the process shown in Fig. 3.

The apparatus is used by and/or is part of a cell which transmits and receives signals based on time division duplex, e.g. the victim TDD cell shown in Fig. 4. The apparatus comprises means for obtaining downlink transmission data of an interfering cell via an optical fiber network between the cell of the apparatus and the interfering cell, means for receiving a signal over the air, the signal comprising an uplink signal and an interference signal, means for estimating a reference receiver signal based on the downlink transmission data and a model of an air channel between the interfering cell and the cell of the apparatus, and means for subtracting the reference receiver signal from the signal received over the air.

The interference signal may comprise at least one of cross slot interference, interference from a communication network system based on time division duplex, and interference from a network communication system based on frequency division duplex.

The means for obtaining may obtain the downlink transmission data prior or at the same time as its transmission caused interference signal travelling over the air channel.

The downlink transmission data may comprise a stream of layer 0 base band data prior to radio frequency modulation.

The means for estimating may estimate the reference receiver signal as a first stream of layer 0 base band data, wherein the apparatus may comprise means for demodulating the signal received over the air into a second stream of layer 0 base band data, and the means for subtracting may subtract the first stream from the second stream.

The means for obtaining may obtain the downlink transmission data directly from the interfering cell or via another cell, e.g. a neighboring cell of the cell of the apparatus.

The apparatus may comprise means for performing a continued adaptation of the model of the air channel.

The above means for obtaining, receiving, estimating, subtracting, demodulating and adapting may be implemented by the processing resources 11, memory resources 12 and interfaces 13 of the control unit 10.

According to an exemplary embodiment of the invention, the means for obtaining, estimating, subtracting and adapting are implemented by a processor of the apparatus, which in turn may be implemented by the processing resources 11, memory resources 12 and interfaces 13 of the control unit 10, and the means for receiving and demodulating are implemented by a transceiver of the apparatus, which in turn may be implemented by the processing resources 11, memory resources 12 and interfaces 13 of the control unit 10. The processor and the transceiver of the apparatus may further transmit and receive signals based on time division duplex.

It is to be understood that the above description is illustrative of the invention and is not to be construed as limiting the invention. Various modifications and applications may occur to those skilled in the art without departing from the true spirit and scope of the invention as defined by the appended claims.

**Claims**

1. A method for use by an apparatus of a cell of a cellular communication network, wherein the cell transmits and receives signals based on time division duplex, the method comprising:

   obtaining downlink transmission data of an interfering cell via an optical fiber network between the cell of the apparatus and the interfering cell;
   receiving a signal over the air, the signal comprising an uplink signal and an interference signal;
   estimating a reference receiver signal based on the downlink transmission data and a model of an air channel between the interfering cell and the cell of the apparatus; and
   subtracting the reference receiver signal from the signal received over the air.

2. The method of claim 1, wherein the interference signal comprises at least one of cross slot interference, interference from a communication network system based on time division duplex, and interference from a network communication system based on frequency division duplex.

3. The method of claim 1 or 2, wherein the downlink transmission data is obtained prior or at the same time as its transmission caused interference signal travelling over the air channel.

**4.** The method of any one of claims 1 to 3, wherein the downlink transmission data comprises a stream of layer 0 base band data prior to radio frequency modulation.

**5.** The method of claim 4, comprising:

estimating the reference receiver signal as a first stream of layer 0 base band data;
demodulating the signal received over the air into a second stream of layer 0 base band data; and
subtracting the first stream from the second stream.

**6.** The method of any one of claims 1 to 5, wherein the downlink transmission data is obtained directly from the interfering cell or via another cell.

**7.** The method of any one of claims 1 to 6, comprising:

performing a continued adaptation of the model of the air channel.

**8.** A computer program product including a program for a processing device, comprising software code portions for performing the steps of any one of claims 1 to 7 when the program is run on the processing device.

**9.** The computer program product according to claim 8, wherein the computer program product comprises a computer-readable medium on which the software code portions are stored.

**10.** The computer program product according to claim 8, wherein the program is directly loadable into an internal memory of the processing device.

**11.** An apparatus of a cell of a cellular communication network, the apparatus comprising a processor and a transceiver which are configured to transmit and receive signals based on time division duplex, wherein
the processor is configured to obtain downlink transmission data of an interfering cell via an optical fiber network between the cell of the apparatus and the interfering cell,
the transceiver is configured to receive a signal over the air, the signal comprising an uplink signal and an interference signal, and
the processor is configured to estimate a reference receiver signal based on the downlink transmission data and a model of an air channel between the interfering cell and the cell of the apparatus and to subtract the reference receiver signal from the signal received over the air.

**12.** The apparatus of claim 11, wherein the interference signal comprises at least one of cross slot interference, interference from a communication network system based on time division duplex, and interference from a network communication system based on frequency division duplex.

**13.** The apparatus of claim 11 or 12, wherein the processor is configured to obtain the downlink transmission data prior or at the same time as its transmission caused interference signal travelling over the air channel.

**14.** The apparatus of any one of claims 11 to 13, wherein the downlink transmission data comprises a stream of layer 0 base band data prior to radio frequency modulation.

**15.** The apparatus of claim 14, wherein
the processor is configured to estimate the reference receiver signal as a first stream of layer 0 base band data,
the transceiver is configured to demodulate the signal received over the air into a second stream of layer 0 base band data, and
the processor is configured to subtract the first stream from the second stream.

**16.** The apparatus of any one of claims 11 to 15, wherein the processor is configured to obtain the downlink transmission data directly from the interfering cell or via another cell.

**17.** The apparatus of any one of claims 11 to 16, wherein the processor is configured to perform a continued adaptation of the model of the air channel.

**Fig. 1**

**Fig. 2**

Interference
Cancellation Process

S10

Obtain Downlink
Transmission Data

S11

Receive Signal
Over The Air

S12

Estimate Reference
Receiver Signal

S13

Subtract Reference
Receiver Signal From
Received Signal

End

**Fig. 3**

Processing
Resources 11

14

Memory
Resources 12

Interfaces 13

Control Unit 10

17

16

15

Interfering
Cell 30

UE 20

**Fig. 5**

Fig. 4

Europäisches
Patentamt

European
Patent Office

Office européen
des brevets

# EUROPEAN SEARCH REPORT

Application Number

EP 13 17 0735

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PETER ROST: "Robust and Efficient Multi-Cell Cooperation under Imperfect CSI and Limited Backhaul", IEEE TRANSACTIONS ON WIRELESS COMMUNICATIONS, IEEE SERVICE CENTER, PISCATAWAY, NJ, US, vol. 12, no. 4, 1 April 2013 (2013-04-01), pages 1910-1922, XP011505465, ISSN: 1536-1276, DOI: 10.1109/TWC.2013.030413.121247 * the whole document * ----- | 1-17 | INV. H04J11/00 |
| X | WENYUAN RAO: "A novel method for reducing cross-slot interference between base stations in TD-SCDMA system", APPLIED MECHANICS AND MATERIALS, vol. 278-280, 11 January 2013 (2013-01-11) , pages 1862-1865, XP009174320, ISSN: 1660-9336 [retrieved on 2013-01-11] * page 1862 - page 1864; figure 1.2 * ----- | 1-17 | |
| X | XIAOLU JIN ET AL: "Studies on Spectral Efficiency of the CDD System", VEHICULAR TECHNOLOGY CONFERENCE FALL (VTC 2009-FALL), 2009 IEEE 70TH, IEEE, PISCATAWAY, NJ, USA, 20 September 2009 (2009-09-20), pages 1-5, XP031600254, ISBN: 978-1-4244-2514-3 * Section IV.; figure 6 * ----- | 1-17 | TECHNICAL FIELDS SEARCHED (IPC) H04J |

The present search report has been drawn up for all claims

| Place of search | Date of completion of the search | Examiner |
|---|---|---|
| Munich | 21 November 2013 | Ó Donnabháin, Emma |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)